# FASCICULE DE BREVET EUROPEEN

(11) **EP 2 019 776 B1**
(45) Date de publication et mention de la délivrance du brevet: **27.10.2010**
(21) Numéro de dépôt: 07731447.4
(22) Date de dépôt: 11.05.2007
(51) Int. Cl.: B64C 7/02, B64C 1/14, B64C 23/06, B64D 29/02

(54) **AERONEF COMPORTANT UN DISPOSITIF DE REDUCTION DE LA TRAINEE INDUITE**
LUFTFAHRZEUG MIT EINER VORRICHTUNG ZUR VERRINGERUNG DES LUFTWIDERSTANDS
AIRCRAFT COMPRISING A DEVICE FOR REDUCING THE INDUCED DRAG

(30) Priorité: 23.05.2006 FR 0604629
(43) Date de publication de la demande: 04.02.2009
(73) Titulaire: Airbus Operations, 31060 Toulouse (FR)
(72) Inventeur: FOL, Thierry, F-31330 Grenade (FR); DEFOS, Marjorie, F-31000 Toulouse (FR)
(74) Mandataire: Petit, Maxime
(86) Numéro de dépôt international: PCT/FR2007/000806
(87) Numéro de publication internationale: WO 2007/135270

(56) Documents cités:
- GB-A- 2 112 077
- US-A- 4 019 696
- US-A- 4 314 681
- US-A- 4 643 376
- US-A- 5 443 230
- US-A- 6 116 015
- US-A1- 2005 011 993

## Description

L'invention est relative à un dispositif permettant de réduire la traînée aérodynamique d'un aéronef.

Sur les aéronefs, on cherche de façon permanente à réduire la traînée aérodynamique en vol de croisière pour diverses raisons, notamment pour économiser le carburant.

On connaît du document GB-A-2 112 077, qui montre toutes les caractéristiques du préambule de la revendication 1, un aéronef comportant une nacelle de réacteur fixée sous une aile par l'intermédiaire d'un mât de support de réacteur.

Selon ce document des moyens sont prévus pour réduire l'écoulement des gaz chaud issus de la tuyère d'échappement sur le bord de fuite du mât et, ainsi, améliorer les performances aérodynamiques de l'aéronef.

Plus particulièrement, ces moyens dirigent l'écoulement de gaz chaud en éloignement du bord de fuite du mât.

La présente invention a précisément pour principal objectif de réduire la traînée aérodynamique d'un aéronef.

A cet effet, l'invention concerne un aéronef conforme à la revendication 1.

Ce corps est soumis à un écoulement d'air local de forte intensité créée par l'interaction du fuselage et de la voilure principale avec l'écoulement d'air longitudinal amont de l'aéronef. La direction de cet écoulement n'est pas alignée avec la direction générale longitudinale de l'écoulement d'air amont de l'aéronef mais est orientée de façon oblique par rapport à cette dernière. La force de portance qui se développe sur ce corps est orientée perpendiculairement à la direction d'écoulement local oblique. Cette force de portance est orientée majoritairement en direction du bout de la voilure principale et, minoritairement, vers l'avant de l'aéronef. Une telle force projetée sur la ligne de vol de l'aéronef induit une force résultante de propulsion.

On notera que des forces locales de traînée sont générées par le corps.

Cependant, la contribution de ces forces locales à la traînée résultante de l'aéronef est largement compensée par la force résultante de propulsion induite par la projection de la portance du corps sur l'axe de la traînée résultante de l'aéronef.

Selon une caractéristique, ledit au moins un corps s'étend à partir d'une extrémité fixée au mât de support de réacteur en éloignement de cette extrémité, suivant une direction d'extension inclinée d'au moins 30° par rapport à l'extrados de l'aile latérale concernée.

L'inclinaison de la direction d'extension du corps n'est pas nécessairement verticale (90°), mais ne doit pas être trop proche de l'horizontale car, alors, le corps ne peut plus utiliser l'écoulement d'air oblique par rapport à la direction longitudinale de l'écoulement d'air amont pour générer une force de portance.

Selon une caractéristique, ledit au moins un corps est agencé sur la ligne de crête du mât de support de réacteur ou à proximité de celle-ci.

En agençant ainsi le corps, ce dernier peut récupérer une partie de l'énergie contenue dans l'écoulement d'air transversal.

Selon une caractéristique, ledit au moins un corps est agencé le long de la direction longitudinale du mât de support de réacteur à une distance de la partie du mât fixée à l'aile latérale qui est comprise entre 10% et 70% de la corde locale de la voilure.

En agençant le corps à une telle distance de la voilure, le corps est ainsi apte à récupérer de l'énergie d'écoulements obliques. En effet, si le corps était placé trop près de la voilure, il se produirait une interaction néfaste avec l'écoulement du bord d'attaque de la voilure.

Selon une caractéristique, ledit au moins un corps possède une surface mouillée et une dimension d'extension, ou hauteur, mesurée à partir d'une extrémité dudit corps fixée au mât de support de réacteur, la surface mouillée et la hauteur étant dans un rapport surface/hauteur compris entre 1 et 4.

En effet, une trop grande surface mouillée du corps génèrerait une force portante très satisfaisante mais une traînée propre trop importante.

On notera qu'en augmentant la hauteur du corps, à surface constante, on réduit la traînée propre générée par celui-ci.

Ainsi, en adaptant de façon appropriée la surface et la hauteur du corps, on obtient un bon compromis entre la force de portance obtenue, que l'on souhaite favoriser, et la traînée propre générée par le corps et que l'on cherche à minimiser.

Selon une caractéristique, ledit au moins un corps possède une surface mouillée qui est ajustée en fonction du gain de réduction de traînée souhaitée et des dimensions générales de l'aéronef.

Selon une autre caractéristique, ledit au moins un corps possède une extrémité dite libre opposée à une extrémité fixée au mât de support de réacteur, l'extrémité libre étant orientée vers l'aval par rapport à la position amont de l'extrémité fixée, conférant ainsi au corps une inclinaison vers l'aval suivant une direction longitudinale.

On notera que pour des vitesses de l'aéronef de l'ordre de Mach 0,4 ou Mach 0,5, l'extrémité libre du corps peut être disposée sensiblement à la verticale de l'extrémité du corps qui est fixée au mât de support. Toutefois, lorsque l'aéronef vole à des vitesses transsoniques, il est préférable d'incliner l'extrémité libre du corps vers l'aval afin de limiter les phénomènes supersoniques.

On limite ainsi la traînée générée par le corps en régime transsonique.

Selon une caractéristique, ledit au moins un corps a une forme d'ailette, ce qui procure au corps un profil aérodynamique.

Selon une caractéristique, ledit au moins un corps comporte une paroi définissant un canal interne d'évacuation d'un écoulement de fluide, ledit canal communiquant, à une extrémité, avec l'intérieur du mât de support de réacteur d'où provient l'écoulement de fluide et, à distance de cette extrémité, avec au moins une ouverture aménagée dans la paroi du corps et débouchant à l'extérieur de ce dernier.

Un tel agencement permet, par exemple, de drainer, par l'intermédiaire du corps, un écoulement d'air interne au mât de support de réacteur vers l'extérieur de ce dernier.

D'autres caractéristiques et avantages apparaîtront au cours de la description qui va suivre, donnée uniquement à titre d'exemple non limitatif, faite en référence aux dessins annexés, sur lesquels :
- la figure 1 est une vue générale schématique en perspective montrant l'implantation d'un corps portant selon l'invention par rapport au fuselage et à la voilure d'un aéronef ;
- la figure 2 est une vue schématique agrandie en perspective, depuis le fuselage de l'aéronef, du corps de la figure 1 ;
   la figure 3 est une vue schématique agrandie de dessus du corps de la figure 2 et des forces mises en jeu ;
- la figure 4 est une vue schématique de face du corps des figures 1 et2;
- la figure 5 est une variante de réalisation montrant le corps de la figure 4 dans une orientation angulaire différente ;
- les figures 6 et 7 sont des vues schématiques du corps selon une variante de réalisation montrant un canal interne d'évacuation d'écoulement et des ouvertures.

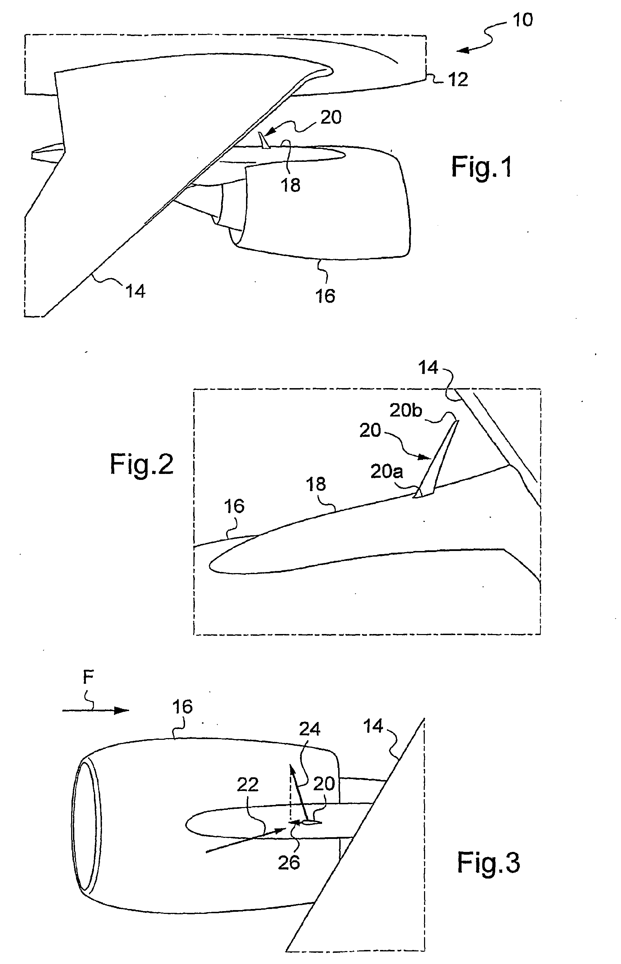

Comme représenté sur la figure 1 et désigné par la référence générale notée 10, un aéronef 10 comporte un fuselage 12 auquel sont raccordées deux ailes latérales, disposées symétriquement de part et d'autre du fuselage.

Sur la figure 1, seule l'une des ailes latérales 14 est représentée.

Une nacelle de réacteur 16 est fixée à l'aile 14 par l'intermédiaire d'un mât de support de réacteur 18.

Le mât de support 18 est lui-même fixé sous l'aile 14 d'une façon conventionnelle non représentée et qui ne sera pas davantage détaillée ici.

L'agencement précité constitué de la nacelle de réacteur 16 et du mât de support 18 est également prévu de façon identique sur l'autre aile latérale non représentée sur cette figure.

On notera que selon le type d'aéronef, plusieurs de ces agencements peuvent être prévus sur chaque aile latérale.

Comme représenté sur les figures 1 et 2, un corps portant 20 est agencé sur le mât de support de réacteur 18.

Ce corps est profilé, par exemple comme une voilure de petite taille, afin de ne pas générer une traînée propre trop importante.

Dans l'exemple représenté sur les figures 1 et 2, le corps 20 se présente sous la forme d'une ailette.

La forme de ce corps portant est effet similaire à celle d'une aile d'un avion qui volerait à la vitesse moyenne locale du lieu d'implantation du corps portant sur le mât 18.

Comme représenté sur la figure 3, lorsque l'aéronef est en vol de croisière, l'écoulement d'air global que rencontre l'aéronef a une direction longitudinale F. Au contact de l'aéronef avec cet écoulement, des écoulements locaux obliques, c'est-à-dire non longitudinaux, sont formés et contribuent à réduire la traînée globale de l'aéronef grâce à l'invention.

Sur la figure 3, on a représenté par la flèche référencée 22 la direction de l'un de ces écoulements obliques, également appelés écoulement de travers.

Cet écoulement local oblique rencontrant le corps portant 20, une force aérodynamique 24 est développée par ce dernier, perpendiculairement à la direction de l'écoulement local oblique.

Cette force de portance comporte une composante longitudinale significative 26 qui représente une force résultante de propulsion contribuant à réduire la traînée aérodynamique globale de l'aéronef.

Bien que la rencontre de l'écoulement local oblique et du corps portant 20 génère également des forces locales de traînée propres à ce corps (ces forces parasites ne sont pas représentées sur la figure), celles-ci sont largement compensées par la composante longitudinale de la force résultante de propulsion générée 24.

Par ailleurs, comme on va le voir ci-après, ces forces locales de traînée peuvent également être réduites.

Comme représenté sur les figures 1 et 2, le corps portant 20 est agencé longitudinalement le long de la crête du mât de support réacteur 18 à distance, d'une part, de la partie du mât fixée à la voilure 14 et, d'autre part, de la partie du mât fixée à la nacelle 16.

Plus particulièrement, le corps est agencé en amont du bord d'attaque de la voilure, à une distance comprise entre 10% et 70% de la corde de la voilure.

Il est en effet important que le corps ne soit pas trop proche de la voilure, afin d'éviter que les interactions de celle-ci avec le bord d'attaque ne soient néfastes.

Par ailleurs, un agencement du corps portant 20 trop proche de la partie du mât de support 18 raccordé à la nacelle 16 risquerait de ne plus bénéficier d'écoulements obliques suffisamment intenses.

Le corps 20 est par exemple positionné sur le mât de support de réacteur à l'endroit où le dérapage, c'est-à-dire l'écart entre l'écoulement oblique local et l'écoulement amont de l'avion (écoulement longitudinal), est maximal.

Plus particulièrement, le corps portant 20 comporte deux extrémités opposées, une extrémité 20a, servant de base, qui est fixée au mât de support réacteur (figure 2) et une extrémité libre 20b éloignée de cette dernière.

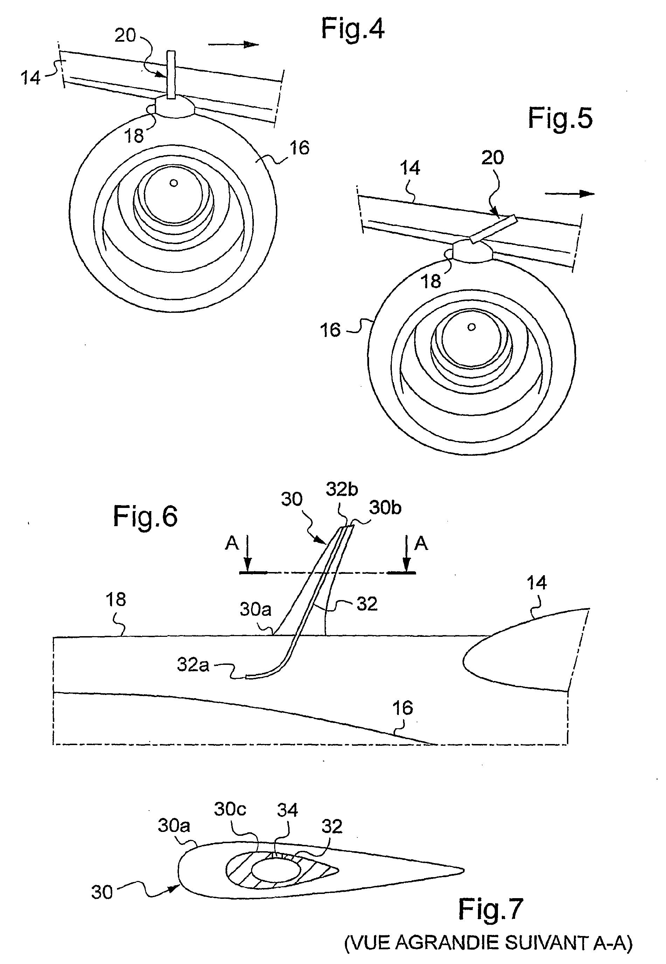

Le corps s'étend ainsi suivant une direction d'extension, également appelée hauteur qui, dans l'exemple représenté sur la figure 4 (vue de face de la nacelle; la flèche indique la direction du fuselage), est sensiblement perpendiculaire à la surface supérieure (extrados) sensiblement horizontale de la voilure 14.

On notera toutefois que la direction d'extension du corps portant 20 représenté dans une position verticale sur les figures 1 et 2, peut être inclinée par rapport à l'extrados de la voilure d'un angle d'inclinaison qui n'est pas nécessairement égal à 90°, mais est au moins égal à 30°.

Un angle d'inclinaison différent de 90° est représenté sur la figure 5 (vue de face de la nacelle ; la flèche indique la direction du fuselage).

En effet, un tel angle d'inclinaison du corps permet encore à ce dernier de générer une force de portance suffisante pour réduire de manière significative la traînée aérodynamique globale de l'aéronef, lors de la rencontre du corps avec un écoulement oblique local.

Il convient également de remarquer que le corps portant peut adopter une telle inclinaison lorsqu'il est fixé sur la ligne de crête du mât de support de réaction 18 et également lorsqu'il est agencé à proximité de cette ligne de crête.

On notera que la surface mouillée du corps portant 20 est ajustée en fonction du gain souhaité de réduction de la traînée aérodynamique de l'avion et aussi des dimensions générales de l'aéronef.

En dimensionnant le corps portant, on souhaite créer le maximum de portance avec la surface minimum afin que le corps portant ne génère pas de traînée propre trop importante.

On notera que les lois de vrillage et de cambrure des profils constituant le corps portant sont déterminées en fonction de l'évolution le long du bord d'attaque du corps portant, d'une part, du dérapage mesuré dans le système d'axe aérodynamique global de l'avion et, d'autre part, de la charge aérodynamique souhaitée sur ce corps.

Plus particulièrement, on définit le profil de chaque section transversale du corps prise perpendiculairement à la hauteur de celui-ci en fonction de l'écoulement oblique local.

On notera que le dimensionnement du corps passe par un ajustement de la dimension d'extension ou hauteur du corps et de sa surface mouillée.

Ainsi, le rapport entre la surface extérieure du corps et sa hauteur est généralement compris entre 1 et 4 (cette valeur dépend des dimensions générales de l'avion) afin d'obtenir un bon compromis entre la force de portance générée lors de la rencontre de l'écoulement oblique local avec le corps et qui doit être maximale et la traînée propre locale induite que l'on cherche à réduire.

A titre d'exemple, la surface mouillée est de 4 m² et la hauteur du corps est de 1 m ce qui donne un rapport de 4.

Par ailleurs, afin d'obtenir la meilleure force de portance possible pour le corps 20, on ajuste la position angulaire du corps par rotation autour d'un axe vertical suivant lequel est définie sa hauteur.

On effectue ainsi un calage du corps par rapport à un axe globalement perpendiculaire aux profils constituant le corps, c'est-à-dire que l'on règle la position de ce dernier par rapport à un écoulement local oblique afin que l'une des surfaces portantes du corps soit frappée de façon optimale par l'écoulement.

On peut ainsi obtenir la finesse aérodynamique, c'est-à-dire le rapport entre la portance et la traînée, maximale.

Il convient de noter que, selon le champ de pression qui se forme sur le corps, c'est-à-dire en fonction des caractéristiques de l'écoulement environnant l'avion, la présence dudit corps peut améliorer l'écoulement d'air sur la voilure.

Dans certaines circonstances, les effets de compression induits en aval du bord de fuite du corps portant peuvent en effet être utilisés pour retarder la compressibilité de la voilure principale.

Ainsi, les profils de la voilure qui sont situés en aval du corps portant sont soumis à des vitesses inférieures à celles qui existeraient en l'absence du corps.

Comme représenté dans l'exemple de réalisation des figures 1 et 2, l'extrémité libre 20b du corps n'est pas nécessairement placée à la verticale de l'extrémité 20a. L'extrémité 20b peut en effet être déplacée suivant une direction longitudinale (axe du fuselage), vers l'aval de façon à se trouver en aval par rapport à la position amont de l'extrémité 20a fixée au mât de support de réacteur 18.

Ainsi, le corps 20 présente une inclinaison vers l'aval qui lui est particulièrement utile pour limiter la traînée locale propre générée par le corps en régime transsonique, c'est-à-dire pour des nombres de Mach locaux supérieurs à 0,6.

Comme représenté sur la figure 6 (vue partielle en coupe du mât dans son environnement), selon une variante, le corps 30 présente un canal interne 32 définissant un passage pour un écoulement d'air provenant de l'intérieur du mât de support de réacteur 18.

Plus particulièrement, l'écoulement interne au mât de support 18 provient, par exemple, de la passe froide d'un système de conditionnement d'air interne du réacteur.

On profite ainsi de la présence du corps 30 pour évacuer cet écoulement provenant du mât.

Plus particulièrement, le corps 30 comporte une paroi dont la surface extérieure définit la forme extérieure du corps et dont la surface interne définit le canal interne d'évacuation d'écoulement de fluide.

Comme représenté sur la figure 6, ce canal communique par une extrémité 32a avec la partie interne du mât de support réacteur 18 et s'étend dans le mât 18 et le long du corps en direction de l'extrémité libre 30b de ce dernier par son extrémité opposée 32b.

Une ou plusieurs ouvertures débouchantes, telles que l'ouverture 34 sur la coupe A-A agrandie de la figure 7, sont aménagées dans la paroi du corps en un ou plusieurs endroits de ce dernier afin de permettre l'évacuation vers l'extérieur de l'écoulement circulant dans le canal.

Sur la figure 7 on a représenté le profil 30c de la paroi du corps portant dans la section de coupe, ainsi que le profil de cette paroi à la base du corps qui est confondue avec son extrémité 30a.

On notera que les ouvertures peuvent être aménagées le long de la paroi du corps, de façon régulière ou non.

Elles sont agencées sur la face du corps qui est opposée à celle recevant l'écoulement oblique (face tournée vers le haut sur la figure 3).

La ou les ouvertures peuvent alternativement être agencées à l'extrémité libre 30b du corps ou à proximité de celles-ci.

L'extrémité 32b du canal constitue en elle-même une ouverture.

On notera que les ouvertures ont une section de passage comprise entre 0,1 et 2dm² selon l'aéronef.

On notera également que les deux possibilités peuvent être réunies, à savoir des ouvertures aménagées le long de la paroi du corps et ce, jusqu'à l'extrémité libre de ce dernier.

## Revendications

1. Aéronef comportant un fuselage longitudinal, au moins deux ailes latérales raccordées symétriquement de part et d'autre du fuselage et au moins une nacelle de réacteur fixée à chaque aile latérale par l'intermédiaire d'un mât de support de réacteur (18), et au moins un corps portant profilé (20 ; 30) agencé sur chacun des mâts de support de réacteur,
**caractérisé en ce que** chaque corps portant profilé (20; 30) est agencé de façon à générer une force résultante propulsive sous l'action d'un écoulement d'air oblique, ledit au moins un corps (20 ; 30) s'étendant à partir d'une extrémité (20a ; 30a) fixée au mât de support de réacteur (18) en éloignement de cette extrémité, suivant une direction d'extension inclinée d'au moins 30° par rapport à l'extrados de l'aile latérale concernée.

2. Aéronef selon la revendication 1, **caractérisé en ce que** ledit au moins un corps (20 ; 30) est agencé sur la ligne de crête du mât de support de réacteur (18) ou à proximité de celle-ci.

3. Aéronef selon l'une des revendications 1 à 2, **caractérisé en ce que** ledit au moins un corps (20 ; 30) est agencé le long de la direction longitudinale du mât de support de réacteur à une distance de la partie du mât fixée à l'aile latérale qui est comprise entre 10% et 70% de la corde locale de la voilure.

4. Aéronef selon l'une des revendications 1 à 3 **caractérisé en ce que** ledit au moins un corps (20 ; 30) possède une surface mouillée et une dimension d'extension, ou hauteur, mesurée à partir d'une extrémité dudit corps fixée au mât de support de réacteur, la surface mouillée et la hauteur étant dans un rapport surface/hauteur compris entre 1 et 4.

5. Aéronef selon l'une des revendications 1 à 4, **caractérisé en ce que** ledit au moins un corps (20 ; 30) possède une surface mouillée qui est ajustée en fonction du gain de réduction de traînée souhaitée et des dimensions générales de l'aéronef.

6. Aéronef selon l'une des revendications 1 à 5, **caractérisé en ce que** ledit au moins un corps (20 ; 30) possède une extrémité dite libre (20b ; 30b) opposée à une extrémité fixée au mât de support de réacteur, l'extrémité libre étant orientée vers l'aval par rapport à la position amont de l'extrémité fixée (20a ; 30a), conférant ainsi au corps une inclinaison vers l'aval suivant une direction longitudinale.

7. Aéronef selon l'une des revendications 1 à 6, **caractérisé en ce que** ledit au moins un corps (20 ; 30) a une forme d'ailette.

8. Aéronef selon l'une des revendications 1 à 7, **caractérisé en ce que** ledit au moins un corps (30) comporte une paroi définissant un canal interne (32) d'évacuation d'un écoulement de fluide, ledit canal communiquant, à une extrémité (32a), avec l'intérieur du mât de support de réacteur (18) d'où provient l'écoulement de fluide et, à distance de cette extrémité, avec au moins une ouverture (34, 32b) aménagée dans la paroi du corps et débouchant à l'extérieur de ce dernier.

## Claims

1. An aircraft comprising a longitudinal fuselage, at least two side wings connected symmetrically on opposite sides of the fuselage and at least one engine nacelle fixed to each side wing via an engine support pylon (18), and at least one streamlined lifting member (20; 30) disposed on each of the engine support pylons, **characterized in that** each streamlined lifting member (20; 30) is disposed in such a way as to generate a propulsive resultant force under the action of an oblique air flow, said at least one member (20; 30) extending away from an end (20a; 30a) fixed to the engine support pylon (18) in an extension direction inclined by at least 30° relative to the top surface of the side wing in question.

2. An aircraft according to claim 1, **characterized in that** the said at least one member (20; 30) is disposed on or close to the crest line of the engine support pylon (18).

3. An aircraft according to one of claims 1 to 2, **characterized in that** the said at least one member (20; 30) is disposed along the longitudinal direction of the engine support pylon at a distance from the part of the pylon fixed to the side wing of between 10% and 70% of the local chord of the wings.

4. An aircraft according to one of claims 1 to 3, **characterized in that** the said at least one member (20; 30) possesses a wetted area and an extension dimension, or height, measured from an end of the said member that is fixed to the engine support pylon, the wetted area and the height being in an area-to-height ratio of between 1 and 4.

5. An aircraft according to one of claims 1 to 4, **characterized in that** the said at least one member (20; 30) possesses a wetted area that is adjusted according to the gain in desired drag reduction and of the general dimensions of the aircraft.

6. An aircraft according to one of claims 1 to 5, **characterized in that** the said at least one member (20; 30) possesses an opposite end (20b; 30b), referred to as a free end, to an end fixed to the engine support pylon, the free end being oriented toward downstream relative to the upstream position of the fixed end (20a; 30a), thus conferring on the member an inclination toward the downstream in a longitudinal direction.

7. An aircraft according to one of claims 1 to 6, **characterized in that** the said at least one member (20; 30) has the shape of a fin.

8. An aircraft according to one of claims 1 to 7, **characterized in that** the said at least one member (30) is provided with a wall defining an internal duct (32) for evacuation of a fluid flow, the said duct communicating, at one end (32a), with the interior of the engine support pylon (18) from which comes the fluid flow and, at a distance from that end, with at least one aperture (34, 32b) provided in the wall of the member and discharging to the outside of the said member.

## Patentansprüche

1. Flugzeug, umfassend einen Längsrumpf, mindestens zwei seitliche Flügel, die symmetrisch zu beiden Seiten des Rumpfs angeschlossen sind, und mindestens eine Triebwerksgondel, die an jedem seitlichen Flügel über einen Triebwerktragmast (18) befestigt ist, und mindestens einen tragenden Profilkörper (20; 30), der an jedem der Triebwerktragmaste angeordnet ist, **dadurch gekennzeichnet, dass** jeder tragende Profilkörper (20; 30) so ausgebildet ist, dass er eine resultierende Antriebskraft unter der Wirkung einer schrägen Luftströmung erzeugt, wobei dieser mindestens eine Körper (20; 30) sich von einem am Triebwerktragmast (18) befestigten Ende (20a; 30a) aus, indem er sich von diesem Ende entfernt, in einer Ausdehnungsrichtung erstreckt, die bezüglich der Oberseite des betreffenden seitlichen Flügels um mindestens 30° geneigt ist.

2. Flugzeug nach Anspruch 1, **dadurch gekennzeichnet, dass** der mindestens eine Körper (20; 30) auf der Scheitellinie des Triebwerktragmastes (18) oder in deren Nähe angeordnet ist.

3. Flugzeug nach einem der Ansprüche 1 bis 2, **dadurch gekennzeichnet, dass** der mindestens eine Körper (20; 30) längs der Längsrichtung des Triebwerktragmastes in einem Abstand von dem an dem seitlichen Flügel befestigten Teil des Mastes angeordnet ist, der zwischen 10% und 70% der örtlichen Flügelsehne beträgt.

4. Flugzeug nach einem der Ansprüche 1 bis 3, **dadurch gekennzeichnet, dass** der mindestens eine Körper (20; 30) eine benetzte Fläche und eine Ausdehnungsabmessung oder Höhe, gemessen von einem am Triebwerktragmast befestigten Ende des Körpers aus, besitzt, wobei die benetzte Fläche und die Höhe in einem Verhältnis Fläche/Höhe zwischen 1 und 4 stehen.

5. Flugzeug nach einem der Ansprüche 1 bis 4, **dadurch gekennzeichnet, dass** der mindestens eine Körper (20; 30) eine benetzte Fläche besitzt, die in Abhängigkeit von dem gewünschten Gewinn an Luftwiderstandsreduzierung und von den allgemeinen Abmessungen des Flugzeugs eingestellt ist.

6. Flugzeug nach einem der Ansprüche 1 bis 5, **dadurch gekennzeichnet, dass** der mindestens eine Körper (20; 30) ein sogenanntes freies Ende (20b; 30b) besitzt, das einem am Triebwerktragmast befestigten Ende entgegengesetzt ist, wobei das freie Ende bezüglich der stromauf gelegenen Lage des befestigten Endes (20a; 30a) stromabwärts gerichtet ist, was dem Körper eine Neigung stromabwärts in einer Längsrichtung verleiht.

7. Flugzeug nach einem der Ansprüche 1 bis 6, **dadurch gekennzeichnet, dass** der mindestens eine Körper (20; 30) eine Flügelform besitzt.

8. Flugzeug nach einem der Ansprüche 1 bis 7, **dadurch gekennzeichnet, dass** der mindestens eine Körper (30) eine Wand umfasst, die einen Innenkanal (32) zur Abfuhr einer Fluidströmung abgrenzt, wobei dieser Kanal an einem Ende (32a) mit dem Inneren des Triebwerktragmastes (18), woher die Fluidströmung kommt, und, in einem Abstand von diesem Ende, mit mindestens einer Öffnung (34, 32b) in Verbindung ist, die in der Wand des Körpers vorgesehen ist und aus diesem herausmündet.
